# EUROPÄISCHE PATENTSCHRIFT

(11) **EP 0 740 094 B1**
(45) Veröffentlichungstag und Bekanntmachung des Hinweises auf die Patenterteilung: **17.09.1997**
(21) Anmeldenummer: 96101089.9
(22) Anmeldetag: 26.01.1996
(51) Int. Cl.: F16K 15/04, F16K 15/02, F16K 27/02

(54) **Rückschlagventil mit Schauglas**
Check valve with viewing glass
Clapet de retenue avec verre-regard

(30) Priorität: 24.04.1995 DE 19514977
(43) Veröffentlichungstag der Anmeldung: 30.10.1996
(73) Patentinhaber: ITT Richter Chemie-Technik GmbH, D-47906 Kempen (DE)
(72) Erfinder: Hatting, Paul, D-47906 Kempen (DE); Susmann, Radmilo, D-48653 Coesfeld (DE)
(74) Vertreter: COHAUSZ HASE DAWIDOWICZ & PARTNER

(56) Entgegenhaltungen:
- CH-A- 300 291
- DE-A- 2 013 456
- DE-A- 2 913 477

## Beschreibung

Die Erfindung betrifft ein Rückschlagventil mit einem Gehäuse, das einen Einlaß, einen Auslaß und einen verschließbaren seitlichen Zugang aufweist, und mit einem in dem Gehäuse befindlichen Schließkörper, der in einer Führungsschienen aufweisenden Führung parallel zur Fließrichtung des Mediums zwischen einem Dichtsitz und einer Rückhaltevorrichtung verschiebbar ist. Ein derartiges Rückschlagventil ist aus der Offenlegungsschrift DE-A-2 913 477 bekannt.

Rückschlagventile haben vielfältige Einsatzmöglichkeiten in allen Bereichen der Förder- und Vakuumtechnik. Ihre Funktionsweise beruht darauf, daß in ihrem durchströmten Gehäuse ein Schließkörper insbesondere eine Kugel oder ein Kegel in einer Führung beweglich angeordnet ist. Die Führung bietet dem Schließkörper beidseitig einen Anschlag, wobei einer der Anschläge einen Dichtsitz ausbildet.

Ein besonderes Einsatzgebiet für Rückschlagventile ist die chemische Verfahrenstechnik. Da dort oftmals extrem aggressive, giftige und ätzende Medien gehandhabt werden, sind die Anforderungen an die Korrosionsfestigkeit und die Dichtigkeit der Ventile entsprechend hoch.

Um die Korrosionsfestigkeit der Ventile unter den extremen Bedingungen zu gewährleisten, sind die Bauteile, die mit dem Medium in Berührung kommen, aus Kunststoff gefertigt oder mit Kunststoff beschichtet. Besonders bewährt hat sich dabei der Einsatz von Fluorkunststoffen, wie z.B. PFA, FEP oder PTFE.

Bei einer besonderen Ausführungsform der Rückschlagventile kann deren Funktion durch ein Panzerschauglas beobachtet werden, das parallel zur Durchflußrichtung im Bereich der Führung des Schließkörpers mit einem Flansch auf einen seitlichen Gehäusezugang aufgeklemmt ist. Ein solcher Zugang bietet dabei nicht nur den Einblick in das Ventil, sondern ermöglicht außerdem die Wartung und den Austausch der Rückschlageinheit mit Schließkörper, Führung und Ventilsitz.

Um den Korrosionsschutz zu gewährleisten, ist es bekannt, ein Rückschlagventil mit Schaugläsern so zu bauen, daß beide Stutzen des Gehäuses bis zum Ansatz der Flansche mit Kunststoff ausgekleidet sind. Die Auskleidung des konisch zulaufenden Einlaßstutzen bildet dabei am Austritt in die Ventilkammer den Dichtsitz für den Schließkörper. Durch die Schaugläser werden nachträglich Führungsstege aus Kunststoff eingebaut, in die der Schließkörper eingesetzt werden kann. Diese Führungsstege haben in Durchlaßrichtung einen Absatz, auf dem der Schließkörper aufliegt, während das Medium durch das Ventil strömt. Sie sind zur anderen Seite so geformt, daß der Schließkörper auf den Dichtsitz geführt wird.

Beim Einbau der losen Führungsstege besteht die Gefahr, daß diese falsch montiert werden oder nachträglich verrutschen, so daß die sichere Führung des Schließkörpers und damit die Dichtigkeit des Ventils nicht mehr gewährleistet ist. Der Einbau der Führungsstege ist zudem unkomfortabel und zeitaufwendig.

Aufgabe der Erfindung ist es daher, eine Führung für den Schließkörper eines Rückschlagventiles so auszubilden, daß der Schließkörper insbesondere in Form einer Kugel oder eines Kegels einfach und sicher durch einen seitlichen Zugang eingesetzt werden kann.

Die Aufgabe wird durch die kennzeichnenden Merkmale des Anspruch 1 gelöst.

Der entscheidende Vorteil der Erfindung ist, daß der Austausch des Schließkörpers ohne Probleme vorgenommen werden kann. Aufgrund der elastischen Eigenschaften der Führung braucht diese nur etwas zur Seite gedrückt werden während der Schließkörper eingebracht wird. Durch die Erfindung kann es nicht mehr zum Verrutschen der Führung während der Montage kommen.

Neben den Kosten für die Montage werden durch die Erfindung die nicht unerheblichen Kosten für die Fertigung der Stege eingespart. Insgesamt trägt die Erfindung damit stark zur Kostensenkung bei der Herstellung derartiger Ventile bei.

Wenn die Führung an die Auskleidung angeformt ist, gibt es keine Ansätze mehr zwischen des einzelnen Teilen der Auskleidung. Die Auskleidung bedeckt somit einstückig die ganze Innenwandung des Gehäuses. Das korrosive Medium kann nicht mehr durch Zwischenräume an das Gehäuse gelangen, so daß ein besserer Schutz des Ventils gewährleistet ist.

Ausführungsbeispiele der Erfindung sind in den Figuren dargestellt und werden im folgenden näher beschrieben.

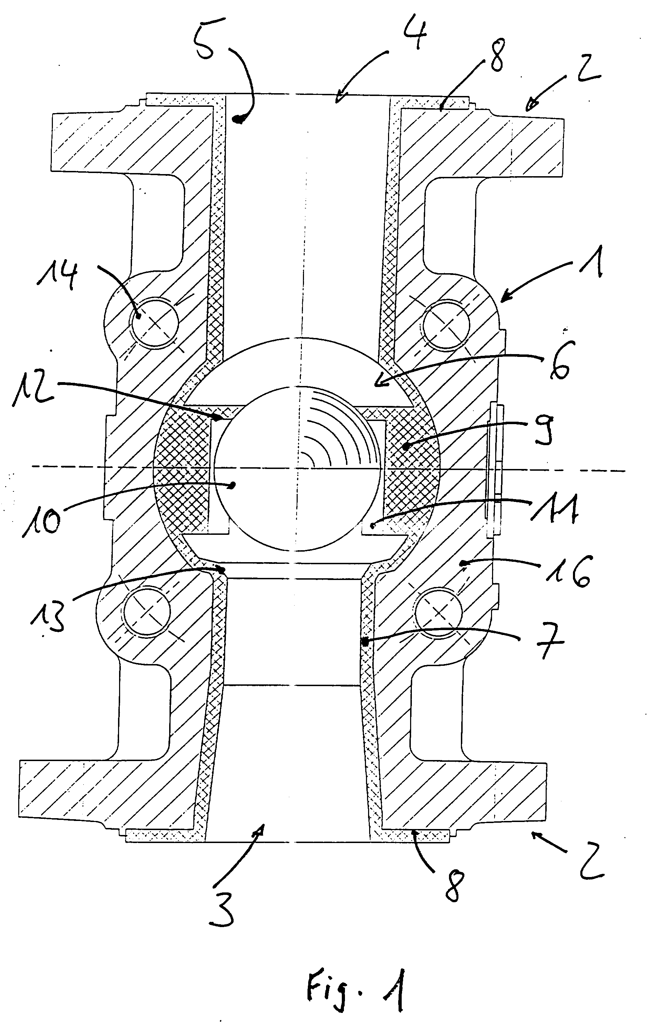

Es zeigen
- Figur 1: einen Längsschnitt durch ein Rückschlagventil in offener Stellung,
- Figur 2: einen Längsschnitt durch ein Rückschlagventil mit kegelförmigem Schließkörper in geschlossener Stellung,

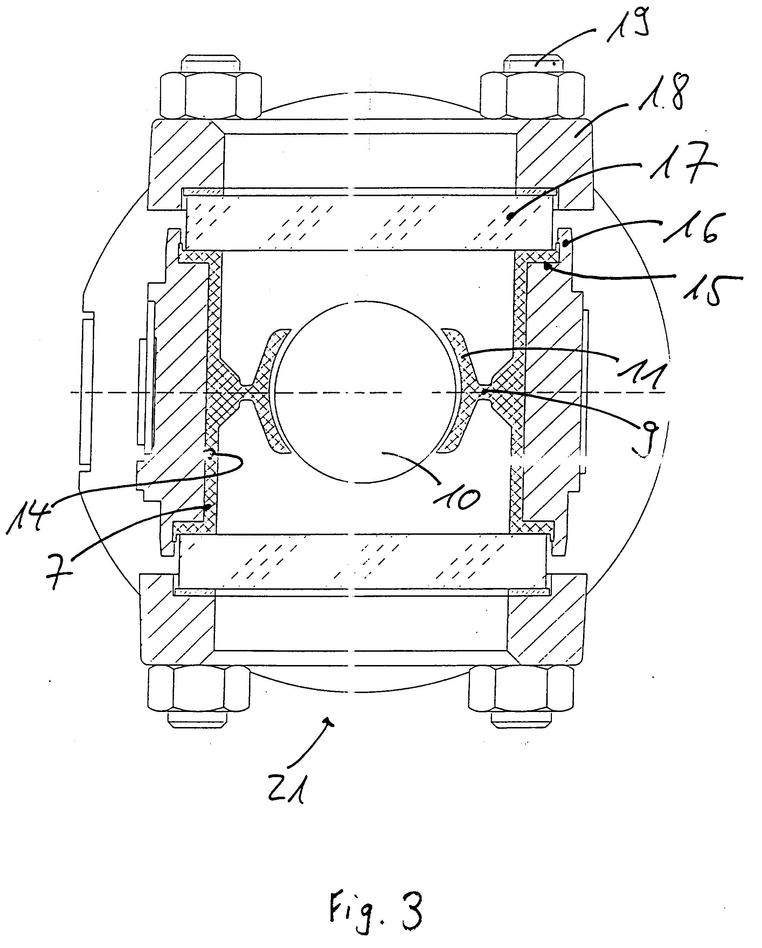

- Figur 3: einen Querschnitt durch ein Rückschlagventil und
- Figur 4: den Einbau eines Schließkörpers.

An das metallische Gehäuse 1 eines Rückschlagventiles sind zwei Stutzen 2 angeformt, die einen Einlaß 3 und einen Auslaß 4 bilden. In der Bohrung 5 ist eine Ventilkammer 6 zur Aufnahme einer Rückschlageinheit vorgesehen, die über mindestens einen Zugang 21 zugänglich ist. Die Wände der Bohrung 5 und der Ventilkammer 6 sind mit einer Schicht aus Kunststoff insbesondere mit Fluorkunststoff wie z.B. PFA, PTFE oder FEP ausgekleidet. Diese Auskleidung 7 ist einstückig aus dem Kunststoff gespritzt und derart aus der Bohrung 5 herausgeführt, daß sie die Dichtflächen 8 der Stutzen 2 bedeckt und somit als Dichtung dient.

Innerhalb der Ventilkammer 6 befindet sich die Rückschlageinheit, die einen Schließkörper 10, in diesem Fall eine Kugel, aufweist, der sich in einer Führung parallel zur Fließrichtung bewegen kann und im Falle eines geschlossenen Ventils in einem Dichtsitz 13 einliegt. Die Kugel 10 ist ebenfalls aus Fluorkunststoff gefertigt und kann je nach Anwendung hohl sein oder aus vollem Material bestehen. Bei geöffnetem Ventil wird die Kugel 10 von einer Sperre gegen die Mitnahme durch das strömende Medium gesichert.

In diesem Ausführungsbeispiel ist die Führung durch zwei diametral gegenüberliegende Stege 9 realisiert, die parallel zur Fließrichtung an die Auskleidung 7 angeformt sind. Sie tragen an ihrer nach innen gerichteten Stirnseite Führungsbahnen 11, die zur Achse der Bohrung 5 hin offen sind. Die Führungsbahnen 11 sind an die Stege 9 angespritzt und haben das Profil eines Kreissegmentes mit dem Radius der Kugel 10. Die Kugel 10 wird zwischen den beiden Führungsbahnen 11 parallel zur Fließrichtung geführt.

In Richtung Auslaß 4 sind die Führungsbahnen 11 durch eine Kante 12 begrenzt. Durch die Kante 12 wird die Kugel 10 an einer weiteren Bewegung mit der Strömung gehindert. In Richtung Einlaß 3 sind die Führungsbahnen 11 offen.

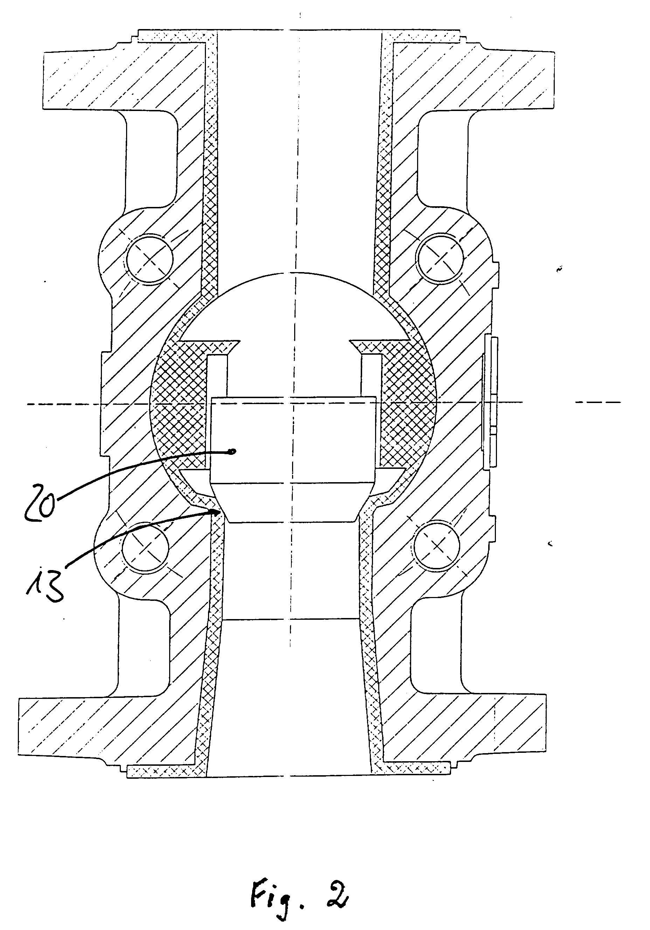

Vom Einlaß 3 kommend verjüngt sich die Bohrung 5 und weist beim Eintritt in die Kammer 6 einen Durchmesser auf, der kleiner als der Durchmesser der Kugel 10 ist. Der Austritt 13 der Bohrung in die Kammer 6 ist von der Auskleidung 7 bedeckt. Wenn sich die Fließrichtung umkehrt, wird die Kugel 10 gegen den Austritt 13 gedrückt und schließt das Ventil. Der Austritt bildet demnach den Dichtsitz 13 für die Kugel 10. Ein geschlossenes Ventil ist in Fig. 2 dargestellt.

Da der Abstand zwischen der offenen Seite der Führungsbahnen 11 und dem Dichtsitz 13 kleiner ist als der Radius der Kugel 10, ist eine sichere Führung der Kugel 10 durch die Führungsbahnen 11 auch bei geschlossenem Ventil gewährleistet.

Senkrecht zur Achse der Bohrung 5 und senkrecht zur den gegenüberliegenden Stegen sind in Höhe der Kammer 6 von beiden Seiten Bohrungen 14 in das Gehäuse 1 eingebracht. Die Bohrungen 14 schließen beidseitig mit Flanschen 16 ab, die jeweils von Dichtflächen 15 umgeben sind. Auf diese Dichtflächen ist jeweils eine Abdeckung, insbesondere ein Schauglas 17 aufsetzbar. Die Schaugläser 17 werden von Klemmflanschen 18 gegen die Dichtflächen 15 gedrückt. Die Klemmflansche 18 sind mittels einer Verschraubung 19 befestigt.

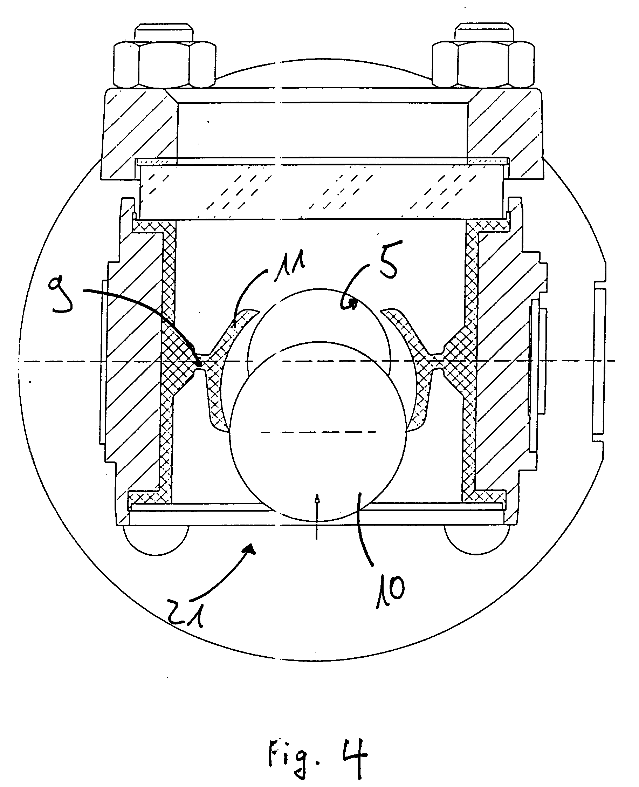

Wenn die Klemmflansche 18 gelöst und die Schaugläser 17 entfernt sind, ist die Rückschlageinheit zugänglich. Wie in Figur 4 gezeigt ist die Halterung der Führungsbahnen 11 durch die Stege so flexibel, daß die Kugel 10 über den Rand der Führungsbahnen 11 aus der Führung seitlich entnommen und wieder eingesetzt werden kann. Auf diese Weise läßt sich die Montage bewerkstelligen und ein Austausch der Kugel beliebig oft wiederholen.

Um eine hohe Dichtigkeit eines Rückschlagventiles zu erreichen ist es vorteilhaft, statt der Kugel einen Kegel 20 als Schließkörper in die Führung einzusetzen. Der Kegel 20 ist ebenfalls aus Kunststoff gefertigt. Der Dichtsitz 13 wird vorteilhafterweise in diesem Fall durch einen Fluorelastomer-Ring abgedichtet.

Statt der beiden Führungsbahnen kann die Führung mehrere an die Auskleidung angeformte Stege aufweisen, die wie ein Käfig den Schließkörper umgeben. Die Stege sind dabei so flexibel, daß der Schließkörper nach der Aufweitung der Zwischenräume seitlich in den Käfig eingeführt werden kann.

Es ist auch vorteilhaft, herkömmliche nicht mit Kunststoff beschichtete Rückschlagventile mit derart flexiblen Führungen auszustatten, um einen bequemen Austausch der Schließkörper bewerkstelligen zu können. Dabei ist es denkbar, Einsätze in die Ventilkammer einzubauen, die wie ein Käfig mit Kunststoffstegen den Schließkörper aufnehmen.

Ventile mit Hohlkugel oder Hohlkegel können bei Umkehrung der Einbauweise als Vakuum Rückschlagventil oder Belüftungsventil eingesetzt werden.

## Patentansprüche

1. Rückschlagventil mit einem Gehäuse (1), das einen Einlaß (3), einen Auslaß (4) und einen verschließbaren seitlichen Zugang (21) aufweist, und mit einem in dem Gehäuse (1) befindlichen Schließkörper (10), der in einer Führungsschienen (11) aufweisenden Führung parallel zur Fließrichtung des Mediums zwischen einem Dichtsitz (13) und einer Rückhaltevorrichtung (12) verschiebbar ist,
**dadurch gekennzeichnet,** daß die
Führungsschienen (11) über flexible Halterungen (9) fest mit dem Gehäuse (1) verbunden sind.

2. Rückschlagventil nach Anspruch 1,
**dadurch gekennzeichnet,** daß das Innere des Gehäuses (1) mit einer Auskleidung (7) aus Kunststoff versehen ist.

3. Rückschlagventil nach Anspruch 2,
**dadurch gekennzeichnet,** daß die Führungsschienen (11) aus Kunststoff gefertigt und über eine als Steg (9) ausgeformte Halterung einstückig mit der Auskleidung (7) verbunden sind.

4. Rückschlagventil nach Anspruch 3,
**dadurch gekennzeichnet,** daß die Führungsschienen (11) zwei diametral gegenüberliegende, zum Inneren des Gehäuses (1) offene Führungsbahnen sind, die jeweils über einen Steg (9) einstückig mit der Auskleidung (7) verbunden sind.

5. Rückschlagventil nach einem der vorherigen Ansprüche,
**dadurch gekennzeichnet,** daß der Schließkörper (10) eine Kugel oder ein Kegel aus Kunststoff ist.

6. Rückschlagventil nach Anspruch 4,
**dadurch gekennzeichnet,** daß die Führungsbahnen (11) den Radius des Schließkörpers (10) haben.

7. Rückschlagventil nach einem der Ansprüche 3-6,
**dadurch gekennzeichnet,** daß die Stege (9) senkrecht zur Fließrichtung verschwenkbar sind.

8. Rückschlagventil nach einem der vorherigen Ansprüche,
**dadurch gekennzeichnet,** daß der Schließkörper (10) hohl ist.

9. Rückschlagventil nach einem der vorherigen Ansprüche,
**dadurch gekennzeichnet,** daß der Zugang (21) mittels eines abnehmbaren Schauglases (17) verschließbar ist.

10. Rückschlagventil nach einem der vorherigen Ansprüche,
**dadurch gekennzeichnet,** daß das Schauglas (17) mit einem Klemmflansch (18) am Gehäuse befestigt ist.

## Claims

1. A check valve having a casing (1) having: an inlet (3); an outlet (4); a closable lateral access (21), and a closure member (10) which is disposed in the casing (1) and can be displaced parallel with the direction of flow of the medium in a guide having guide rails (11) between a sealing seat (13) and a check device (12),
**characterized in that** the guide rails (11) are firmly connected to the casing (1) via flexible retaining means (9).

2. A check valve according to claim 1,
**characterized in that** the interior of the casing (1) has a plastics lining (7).

3. A check valve according to claim 2,
**characterized in that** the guide rails (11) are made from plastics and connected unitarily to the lining (7) via a retaining means taking the form of a web (9).

4. A check valve according to claim 3,
**characterized in that** the cuide rails (11) are two diametrically opposite guideways which are open towards the interior of the casing (1) and are each connected unitarily to the lining (7) via a web (9).

5. A check valve according to one of the preceding claims, **characterized in that** the closure member (10) is a plastics ball or cone.

6. A check valve according to claim 4,
**characterized in that** the guideways (11) have the radius of the closure member (10).

7. A check valve according to one of claims 3 to 6,
**characterized in that** the webs (9) can be pivoted perpendicularly of the direction of flow.

8. A check valve according to one of the preceding claims, **characterized in that** the closure member (10) is hollow.

9. A check valve according to one of the preceding claims, **characterized in that** the access (21) can be closed by means cf removable viewing glass (17).

10. A check valve according to one of the preceding claims, **characterized in that** the viewing glass (17) is attached to the casing by a clamping flange (18).

## Revendications

1. Clapet antiretour avec un boîtier (1) qui présente une admission (3), une décharge (4) et un accès latéral (21) verrouillable et avec un corps de fermeture (10), se trouvant dans le boîtier (1), qui est coulissant, dans un guidage présentant des rails de guidage (11), parallèlement à la direction d'écoulement du liquide, entre un siège d'étanchéité (13) et un dispositif de retenue (12),
caractérisé en ce que les rails de guidage (11) sont reliés de manière inamovible au boîtier (1) par l'intermédiaire d'attaches flexibles (9).

2. Clapet antiretour selon la revendication 1,
caractérisé en ce que l'intérieur du boîtier (1) est muni d'un revêtement (7) en matière synthétique.

3. Clapet antiretour selon la revendication 2,
caractérisé en ce que des rails de guidage (11) sont fabriqués en matière synthétique et sont reliés d'une seule pièce au revêtement (7) par l'intermédiaire d'une attache conformée selon une entretoise (9).

4. Clapet antiretour selon la revendication 3,
caractérisé en ce que les rails de guidage (11) sont deux chemins de guidage diamétralement opposés ouverts vers l'intérieur du boîtier (1) qui sont respectivement reliés d'une seule pièce au revêtement (7) par l'intermédiaire d'une entretoise (9).

5. Clapet antiretour selon l'une des revendications précédentes,
caractérisé en ce que le corps de fermeture (10) est une bille ou un cône en matière synthétique.

6. Clapet antiretour selon la revendication 4,
caractérisé en ce que les chemins de guidage (11) ont le rayon du corps de fermeture (10).

7. Clapet antiretour selon l'une des revendications 3 à 6,
caractérisé en ce que les entretoises (9) sont pivotantes orthogonalement à la direction d'écoulement.

8. Clapet antiretour selon l'une des revendications précédentes,
caractérisé en ce que le corps de fermeture (10) est creux.

9. Clapet antiretour selon l'une des revendications précédentes,
caractérisé en ce que l'accès (21) peut être verrouillé au moyen d'un verre-regard (17) amovible.

10. Clapet antiretour selon l'une des revendications précédentes,
caractérisé en ce que le verre-regard (17) est fixé au boîtier par une bride de serrage (18).
